(19)

Europäisches
Patentamt
European
Patent Office
Office européen
des brevets

(11) **EP 3 293 733 A1**

(12) **EUROPEAN PATENT APPLICATION**

(43) Date of publication:
14.03.2018 Bulletin 2018/11

(51) Int Cl.:
*G10L 19/008* (2013.01)  *G10L 19/20* (2013.01)

(21) Application number: 16306129.4

(22) Date of filing: 09.09.2016

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Thomson Licensing
92130 Issy-les-Moulineaux (FR)**

(72) Inventors:
• **PUY, Gilles
35576 CESSON-SEVIGNE (FR)**

• **DUONG, Quang Khanh Ngoc
35576 CESSON-SEVIGNE (FR)**
• **OZEROV, Alexey
35576 CESSON-SEVIGNE (FR)**
• **PEREZ, Patrick
35576 CESSON-SEVIGNE (FR)**

(74) Representative: **Huchet, Anne
TECHNICOLOR
1-5, rue Jeanne d'Arc
92130 Issy-les-Moulineaux (FR)**

(54) **METHOD FOR ENCODING SIGNALS, METHOD FOR SEPARATING SIGNALS IN A MIXTURE, CORRESPONDING COMPUTER PROGRAM PRODUCTS, DEVICES AND BITSTREAM**

(57)     A method is proposed for encoding at least two signals. The method comprises: mixing the at least two signals in a mixture; computing a map Z representative of locations of the at least two signals in a time-frequency plane; obtaining sampling locations of the map Z; sampling the map Z at the sampling locations, the sampling delivering a first list of values $Z_\Omega$; and transmitting the mixture of the at least two signals and a second list of values based on the first list of values $Z_\Omega$.

Figure 1

**Description**

## 1. FIELD OF THE DISCLOSURE

The field of the disclosure is that of signal (or source) separation in a mixture of signals (i.e. in a sum of signals).

More particularly, the disclosure relates to a method for separating signals in a mixture of signals and a method for efficiently transmitting information enabling such separation on top of the transmitted mixture.

The disclosure can be applied notably, but not exclusively, to the field of audio source separation. As such, the disclosure is of interest in emerging applications in smartphone, TV, games requiring the ability to efficiently compress audio objects on the encoding side (for saving bandwidth in transmission), and to separate them on the decoding side. However, the disclosure can be of interest in any other field that requires transmitting efficiently a mixture of signal and separating them after reception.

## 2. TECHNOLOGICAL BACKGROUND

As audio source separation has remained a challenging task, the use of prior information about the sources to guide the separation process has been largely considered in the literature and often referred to as informed source separation (ISS). Such information can be for instance music score (as proposed in "J. Fritsch and M.D. Plumbley, "Score informed audio source separation using constrained nonnegative matrix factorization and score synthesis," in IEEE Int. Conf. on Acoustics, Speech, and Signal Processing (ICASSP), 2013, pp. 888-891"), text transcript (as proposed in "L. Le Magoarou, A. Ozerov, and N. Q. K. Duong, "Text-informed audio source separation. example-based approach using non-negative matrix partial co-factorization," Journal of Signal Processing Systems, pp. 1-5, 2014"), or extracted from the sources themselves (as proposed for instance in "M. Parvaix and L. Girin, "Informed source separation of linear instantaneous under-determined audio mixtures by source index embedding," IEEE Transactions on Audio, Speech, and Language Processing, vol. 19, no. 6, pp. 1721-1733, 2011.")

The later case concerns audio coding applications where the so-called "side information" is extracted at the encoding stage where the original sources are known, and then used to guide the source estimation at the decoding stage where only the mixture is observed. It is also related to spatial audio object coding (SAOC), a recent standardization approach in the MPEG audio group (see "J. Engdegard, B. Resch, C. Falchand O. Hellmuth, J. Hilpert, A. Holzer, L. Terentiev, J. Breebaart, J. Koppens, E. Schuijers, and W. Oomen, "Spatial audio object coding (SAOC) - The upcoming mpeg standard on parametric object based audio coding," in 124th Audio Engineering Society Convention (AES), May 2008"), for the same type of practical application.

However, as any known parametric coding schemes, the encoding processes of both ISS and SAOC require remarkable computation cost.

There is thus a need for an efficient method for encoding a mixture of signals that allows further separation of the signals after reception of the mixture while keeping minimal the overhead in the transmitted bitstream for keeping the transmission efficient.

## 3. SUMMARY

A particular aspect of the present disclosure relates to a method for encoding at least two signals. The method comprises:

- mixing the at least two signals in a mixture;
- computing a map Z representative of locations of the at least two signals in a time-frequency plane;
- obtaining sampling locations of the map Z;
- sampling the map Z at the sampling locations, said sampling delivering a first list of values $Z_\Omega$; and
- transmitting the mixture of the at least two signals and a second list of values based on the first list of values $Z_\Omega$.

Thus, at least one embodiment of the present disclosure proposes a new and inventive solution for the encoding of at least two signals in the perspective of an efficient transmission in term of bit rate. More precisely, it is proposed to rely on the transmission of the mixture (i.e. the sum) of the signals instead of the transmission of the signals themselves. This thus requires separating the signals from the mixture after reception of the mixture.

For this to be possible, a map Z representative of locations, in the time-frequency (TF) plane, of the signals that compose the mixture to be transmitted is computed, thus allowing for the further separation of the signals. Then, in some embodiments of the present disclosure, only the samples of it, in the form of a list of values are transmitted on top of the mixture signals. Such an embodiment can help limiting the overhead in the bitstream to be transmitted while allowing the separation after reception.

According to one embodiment, the method comprises coding the list of values $Z_\Omega$, said coding delivering the second list of values Zc.

Thus, the list of values $Z_\Omega$ is further coded (e.g. differential coding or an arithmetic coding). Such an embodiment can also help limiting the overhead in the bitstream to be transmitted, and thus the bitrate of the bitstream at the end.

In one embodiment of the present disclosure, it is proposed a method for separating at least one signal from a mixture of at least two signals. Such method comprises:

- obtaining a first list of values $Z_\Omega$ of a map Z at sampling locations in a time-frequency plane, the map Z being representative of locations of the at least two signals in the time-frequency plane;
- obtaining the sampling locations of the map Z;
- estimating an estimated map $\hat{Z}$ based on the sampling locations and on the first list of values $Z_\Omega$; and
- separating at least one of the at least two signals from the mixture based on the mixture and the estimated map $\hat{Z}$.

Thus, an estimate $\hat{Z}$ of the map Z is obtained based on a reduced number of values (compared to the actual size of the map Z), retrieved from the list of values $Z_\Omega$. Such an embodiment can allow a separation of the signals in the mixture while helping to limit the amount of information transmitted on top of the mixture.

According to one embodiment, the act of obtaining the sampling locations is carried out using a same sampling distribution as the one used, in a method for encoding, for delivering the first list of values $Z_\Omega$.

Thus, the estimate $\hat{Z}$ can be based on a correct association between the values in the first list of values $Z_\Omega$ and the sampling locations.

According to one embodiment, the act of estimating of an estimated map $\hat{Z}$ comprises filling elements of the estimated map $\hat{Z}$ corresponding to the sampling locations with values in the first list of values $Z_\Omega$ with the sampling locations in the time-frequency plane.

According to another embodiment, estimating of an estimated map $\hat{Z}$ comprises reconstructing missing elements of the estimated map $\hat{Z}$, corresponding to locations different from the sampling locations.

Thus, the reconstructing can for instance use at least one predefined value. In such an embodiment, the estimate $\hat{Z}$ of the map Z can be derived in a very simple and efficient way at the decoder side.

According to yet another embodiment, estimating of an estimated map $\hat{Z}$ comprises:

- obtaining second feature vectors based on the mixture, similar feature vectors at different locations in the time-frequency plane indicating a contribution of similar signals at the different locations;
- building a second graph G' connecting locations in the time-frequency plane based on a similarity between at least two second feature vectors; and
- computing the estimated map based on the second graph, the sampling locations and the list of values $Z_\Omega$.

Such an embodiment allows restoring at least partially the information of the original map Z through the estimation of the estimate $\hat{Z}$ of the map Z. It can notably take advantage of the information in the graph G' that indicates the connection between nodes in the time-frequency plane in which a given source signal is active). Such an embodiment can be based only, or mostly, on the knowledge of the mixture signal (thus allowing limiting the bitrate of the bitstream by avoiding transmitting each of the signals).

According to one embodiment, the first list of values $Z_\Omega$ is obtained by decoding a second list of values Zc.

Thus, the overhead in the bitstream on top of the mixture signal is further limited.

According to one embodiment, the act of obtaining sampling locations comprises:

- obtaining a sampling distribution; and
- obtaining the sampling locations based on the sampling distribution.

According to one embodiment, the act of obtaining a sampling distribution comprises using a predetermined sampling distribution.

Thus, the sampling locations can be derived in a very efficient and robust way for both the encoding and the signal separation.

According to one embodiment, the act of obtaining a sampling distribution comprises computing the sampling distribution as a function of an energy content of the mixture in the time-frequency plane.

Thus, the sampling locations can be derived taking into account the locations where the signals have their energy, i.e. where the information they carry is located in practice.

According to one embodiment, the act of obtaining a sampling distribution comprises:

- obtaining first feature vectors based on the mixture, similar feature vectors at different locations in the time-frequency plane indicating a contribution of similar signals at the different locations;
- building a first graph G connecting locations in the time-frequency plane based on a similarity between at least two first feature vectors; and
- computing the sampling distribution based on the first graph.

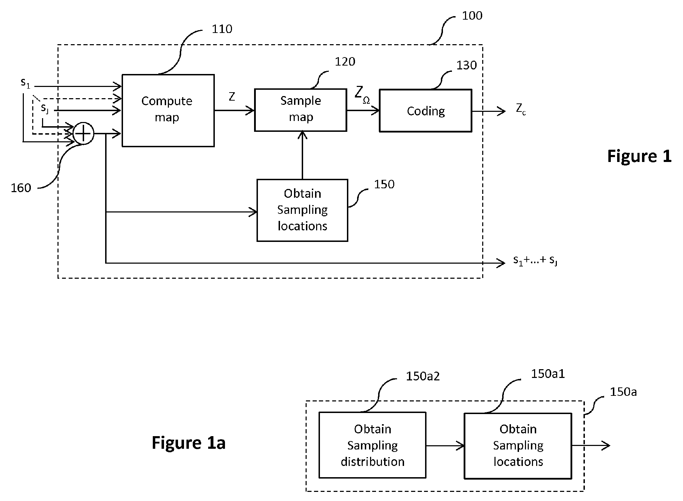

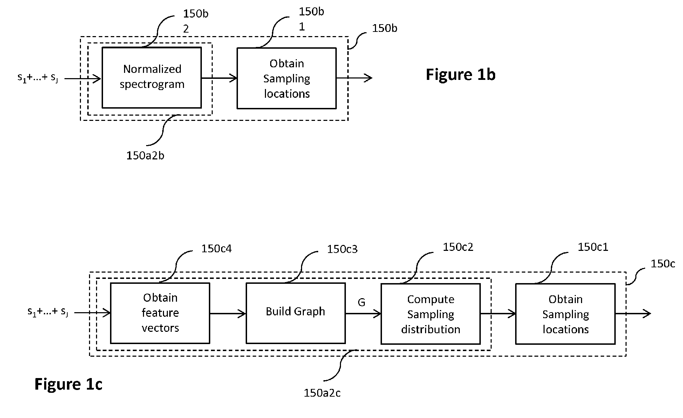

Thus, the sampling locations can be derived optimally for sampling k-bandlimited signals (see definition for k-bandlimited signals given below in relation with block 150c2 in figure 1c), with high probability.

According to one embodiment, the act of obtaining a sampling distribution in the method for encoding at least two signals comprises obtaining at least two different first graph and electing one of the first graphs for deriving the sampling locations, and wherein the act of transmitting the mixture and the second list of values comprises transmitting a parameter representative of said electing.

Thus, a method for obtaining the first feature vectors can be elected on the coder side and used on the decoder side.

According to one embodiment, the method for separating at least one signal from a mixture of at least two signals comprises obtaining a parameter to be used for obtaining the first feature vectors in said act of obtaining a sampling distribution.

Thus, the method for obtaining the feature vectors can for instance be selected according to this parameter for the signal separation.

According to one embodiment, the act of obtaining the sampling locations based on the sampling distribution comprises:

- choosing deterministically the sampling locations from the sampling distribution; or
- choosing dynamically the sampling locations from the sampling distribution using a predetermined seed.

Thus, the sampling locations can be derived in a very efficient and robust way for both the encoding and the signal separation when chosen deterministically from a sampling distribution. Conversely, the use of a seed, shared between the encoder and the source separator, can allow however a flexibility in the determination of the sampling locations.

According to one embodiment, the act of obtaining first or second feature vectors enforces a method belonging to the group comprising:

- non-negative matrix factorization;
- deep neuronal network; and
- non-negative tensor factorization.

Deep neuronal networks (DNN) can be trained on datasets containing signals of interest. The features are thus adapted to these types of signals, which can potentially help improving the performance of the method. NMF and NTF are well-known tools to model audio signals. They do not need require pre-training and are thus more generic than DNN.

According to one embodiment, the similarity in between the first feature vectors or in between the second feature vectors is based on the use of a $l_1$ or a $l_2$ norm.

Thus, whereas the l2 norm (also known as Euclidean norm) is the most widely used norm for comparing vectors, the l1 norm is more robust than the l2 norm when comparing feature vectors that are globally similar except at few entries (outliers vectors). The construction of the graph might be more robust to outliers in the feature vectors. The l1 norm is furthermore simpler to compute.

According to one embodiment, at least one of the at least two signals in the mixture is an audio signal.

The disclosed method also applies when audio signals are superposed with other kind of signals in the mixture.

Another aspect of the present disclosure relates to a computer program product comprising program code instructions for implementing the above-mentioned methods (in any of their different embodiments), when the program is executed on a computer or a processor.

Notably, the present disclosure relates to a computer program product comprising program code instructions for implementing, when the program is executed on a computer or a processor, a method for encoding at least two signals comprising:

- mixing (160) said at least two signals in a mixture;
- computing (110) a map Z representative of locations of said at least two signals in a time-frequency plane;
- obtaining (150, 150a, 150b, 150c) sampling locations of said map Z;
- sampling (120) said map Z at the sampling locations, said sampling delivering a first list of values $Z_\Omega$; and
- transmitting (100) said mixture of the at least two signals and a second list of values based on said first list of values $Z_\Omega$;

and/or a method for separating at least one signal from a mixture of at least two signals, comprising:

- obtaining (230) a first list of values $Z_\Omega$ of a map Z at sampling locations in a time-frequency plane, said map Z being representative of locations of said at least two signals in said time-frequency plane;
- obtaining (250) said sampling locations of said map Z;
- estimating (220, 220a) an estimated map Z based on said sampling locations and on said first list of values $Z_\Omega$; and
- separating (210) at least one of said at least two signals from said mixture based on said mixture and said estimated map Z.

Another aspect of the present disclosure relates to a non-transitory computer-readable carrier medium storing a computer program product which, when executed by a computer or a processor causes the computer or the processor to carry out the above-mentioned methods (in any of their different embodiments).

Notably, the present disclosure relates to a non-transitory computer-readable carrier medium storing a computer program product which, when executed by a computer or a processor causes the computer or the processor to carry out a method for encoding at least two signals comprising:

- mixing (160) said at least two signals in a mixture;
- computing (110) a map Z representative of locations of said at least two signals in a time-frequency plane;
- obtaining (150, 150a, 150b, 150c) sampling locations of said map Z;
- sampling (120) said map Z at the sampling locations, said sampling delivering a first list of values $Z_\Omega$; and
- transmitting (100) said mixture of the at least two signals and a second list of values based on said first list of values $Z_\Omega$; and/or a method for separating at least one signal from a mixture of at least two signals, comprising:
- obtaining (230) a first list of values $Z_\Omega$ of a map Z at sampling locations in a time-frequency plane, said map Z being representative of locations of said at least two signals in said time-frequency plane;
- obtaining (250) said sampling locations of said map Z;
- estimating (220, 220a) an estimated map Z based on said sampling locations and on said first list of values $Z_\Omega$; and
- separating (210) at least one of said at least two signals from said mixture based on said mixture and said estimated map Z.

Another aspect of the present disclosure relates to a device for encoding at least two signals, characterized in that it comprises at least one processor configured for:

- mixing the at least two signals in a mixture;
- computing a map Z representative of locations of the at least two signals in a time-frequency plane;
- obtaining sampling locations of the map Z;
- sampling the map Z at the sampling locations, said sampling delivering a first list of values $Z_\Omega$; and
- transmitting the mixture of the at least two signals and a second list of values based on the first list of values $Z_\Omega$.

Such a device is particularly adapted for implementing the method for encoding at least two signals according to the present disclosure (according to any of the various aforementioned embodiments).

Thus, the characteristics and advantages of this device are the same as the method for encoding described above. Therefore, they are not described in more detail.

Another aspect of the present disclosure relates to a device for separating at least one signal from a mixture of at least two signals, characterized in that it comprises at least one processor configured for:

- obtaining a first list of values $Z_\Omega$ of a map Z at sampling locations in a time-frequency plane, the map Z being representative of locations of the at least two signals in the time-frequency plane;
- obtaining the sampling locations of the map Z;
- estimating an estimated map $\hat{Z}$ based on the sampling locations and on the first list of values $Z_\Omega$; and
- separating at least one of the at least two signals from the mixture based on the mixture and the estimated map $\hat{Z}$.

Such a device is particularly adapted for implementing the method for separating at least one signal from a mixture of at least two signals according to the present disclosure (according to any of the various aforementioned embodiments).

Thus, the characteristics and advantages of this device are the same as the method for separating described above. Therefore, they are not described in more detail.

Another aspect of the present disclosure relates to a bitstream representative of a mixture of at least two signals. The bitstream comprises the mixture of at least two signals and a second list of values based on a first list of values $Z_\Omega$ obtained as sampling values of a map Z representative of locations of the at least two signals in a time-frequency plane taken at sampling locations.

Such bitstream is delivered by a device implementing the method for encoding at least two signals according to the present disclosure, and intended to be used by a device implementing the method for separating at least one signal from a mixture of at least two signals according to the present disclosure (according to any of their various aforementioned embodiments).

Thus, the characteristics and advantages of this bitstream are the same as the methods described above. Therefore, they are not described in more detail.

Another aspect of the present disclosure relates to a system comprising a first device for encoding at least two signals as disclosed above and a second device for separating at least one signal from a mixture of at least two signals as disclosed above, the second device receiving, from the first device, the mixture of the at least two signals and the second list of values based on the first list of values $Z_\Omega$, wherein said obtaining of sampling locations enforce a same predetermined sampling distribution in both first and second devices.

Thus, the estimate $\hat{Z}$ in the decoder can be based on a correct association between the values in the first list of values $Z_\Omega$ and the sampling locations.

## 4. LIST OF FIGURES

Other features and advantages of embodiments shall appear from the following description, given by way of indicative and non-exhaustive examples and from the appended drawings, of which:

- Figure 1 is a flowchart of particular embodiments of the disclosed method for encoding signals;
- Figures 1a, 1b and 1c illustrate methods for obtaining sampling locations according to different embodiments of the present disclosure;
- Figure 2 is a flowchart of particular embodiments of the disclosed method for separating signals in a mixture of signals;
- Figure 2a illustrates a method for estimating a map representative of the localization of the signals in the mixture in the time-frequency plane according to a particular embodiment of the present disclosure;
- Figure 3 is a schematic illustrations of the structural blocks of an exemplary device that can be used for implementing the method for encoding signals according to any of the embodiments disclosed in figures 1, 1a, 1b and 1c;
- Figure 4 is a schematic illustrations of the structural blocks of an exemplary device that can be used for implementing the method for separating signals in a mixture of signals according to any of the embodiments disclosed in figures 2 and 2a.

## 5. DETAILED DESCRIPTION

In all of the figures of the present document, the same numerical reference signs designate similar elements and steps.

The general principle of the disclosed method consists in computing a map representative of locations, in the time-frequency (TF) plane, of the signals that compose the mixture to be transmitted. The map is then sampled taking into account notably of sampling locations in the time-frequency plane and the sampled map transmitted with the mixture. The separation of the signals from the mixture can thus be performed based on an estimate of the map reconstructed from the sampled map.

Referring now to **figure 1,** we present a flowchart of particular embodiments of the disclosed method for encoding signals.

In block 160, a mixture signal $x = s_1 + ... + s_j$ is obtained from the source signals $s_j$, j from 1 to J.

In block 110, a map Z representative of the localization in a time-frequency plane of the signals $s_j$, j from 1 to J, that compose the mixture signal $x = s_1 + ... + s_j$ is computed.

Indeed, audio signals are usually almost disjoint in the time-frequency representation, i.e. only one source signal $s_j$ is predominantly active at each TF point. A binary mask showing this activation for a given source can thus be a good indicator to recover sources from the mixture.

In the present embodiment, for deriving the map Z, a short-term Fourier transform (STFT) of x is computed and it is assumed that only one signal is active at each TF point. Under this assumption, deriving the map Z is equivalent in identifying which signal j is active in what location in the TF domain.

According to that, denoting $X \in \mathbb{C}^{F \times N}$ and $S_j \in \mathbb{C}^{F \times N}$ the complex matrices of the STFT coefficients of the mixture $x$ and of the source signal $s_j$ respectively, the map Z is derived by computing first:

$$M_j := \underset{M \in \mathbb{R}^{F \times N}}{\operatorname{argmin}} \|X \odot M - S_j\|_F^2 = S_j \oslash X,$$

for each source signal $s_j$, j from 1 to J. In the above equation, $\odot$ and $\oslash$ stand for the element-wise product and division, respectively. We then determine which unique source signal is dominantly active at each TF point $(f,n)$ by checking which $M_j$ has the largest entry at $(f, n)$. We thus obtain a map $Z \in \{1,...., J\}^{F \times N}$ whose entries are

$$Z[f,n] \in \underset{1 \leqslant j \leqslant J}{\operatorname{argmax}} \; M_j[f,n].$$

Consequently, the value of the map Z considered at TF point $(f, n)$ directly gives the index of the source j that is active at that TF point.

Note that with the above definition, in the case where all sources signals are inactive at a TF point, then one of the source index is arbitrarily chosen. In a variant, this is an index corresponding to a predefined state that is chosen. For instance an index that the decoder aiming at separating the source signals can interpret as meaning "no source is active at that TF point $(f, n)$".

It can be seen that with the knowledge of X and Z, the activation of all the sources can be determined by constructing, for each source index j, a binary activation matrix $M_j^* \in \{0,1\}^{F \times N}$ that satisfies

$$M_j^*[f,n] := \left\{ \begin{array}{ll} 1 & \text{if } Z[f,n] = j, \\ 0 & \text{otherwise}, \end{array} \right.$$

$$(\text{Eq-1})$$

and by computing the inverse STFT of $X \odot M_j^*$ to obtain the estimate of source j.

In block 120, the map Z is sampled at sampling locations in the TF plane that are derived according to the method disclosed in relation with block 150 described below.

Such sampling allows reducing the quantity of information to be transmitted on top of the mixture signal x for allowing a further separation of the source signals $s_j$, j from 1 to J, that compose the mixture.

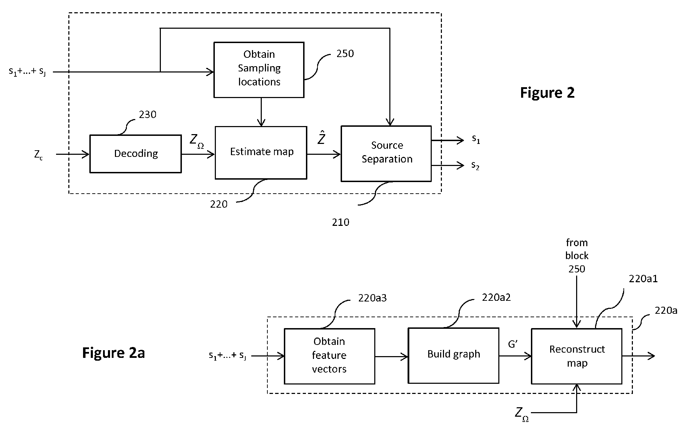

For this to be possible, sampling locations $\omega_1$ to $\omega_m$ are provided in a deterministic order so that the corresponding values of the map Z taken at those sampling locations are sorted in their successive order of generation and stored accordingly in a list of values $Z_\Omega$ (e.g. that takes the form of a row or column vector), $\Omega = \{\omega_1, ..., \omega_m\}$ denoting the set of sampling locations. The knowledge of the sampling locations and/or of the order of generation of the sampling locations therefore allows performing the reverse operation as discussed below in relation with block 220 in figure 2. More precisely, a value sorted with a given rank r in the ordered list of values $Z_\Omega$ can be associated to a sampling location at TF point $(f,n)$ corresponding to the r-th sampling location obtained in block 150.

In block 150, the sampling locations used in block 120 for sampling the map Z are obtained.

Various embodiments of the method in block 150 for obtaining those sampling locations are disclosed below in relation with block 150a, 150b and 150c in figures 1a, 1b and 1c respectively.

In block 130, the values in the list of values $Z_\Omega$ are coded for delivering a coded sampled map Zc.

Indeed, it appears that the elements in $Z_\Omega$ can take only J values. One strategy for representing those elements can thus consist in coding each value using $log_2(J)$ bits. As all values do not appear with the same probability, another strategy can consist in coding this list of symbols using, e.g., arithmetic coding. Still another strategy can consist in using differential coding before arithmetic coding.

In such an embodiment, it can be proposed to reorder the indices in $\Omega$ as follows. We travel across the time-frequency plane starting from the lowest time index and lowest frequency, then going towards the largest time index, and continue in zigzag towards the highest frequencies. The indices are reordered in order of appearance during this travel. Even though the indices in $\Omega$ are selected at random, the inventor noticed that for the sampling distributions that can potentially lead to the best results, this reordering make appear sequence of constant values: the same source remains active for a while. To take potentially advantage of this effect, it is proposed in some embodiments to use differential coding to encode the reordered list. For simplicity, let assume that the indices $\omega_1$ to $\omega_m$ are ordered as just described. We compute the sequence $\tilde{Z} \in \{0, ...,J - 1\}^m$ that satisfies $\tilde{Z}[1] := \tilde{Z}[\omega_1] - 1$ and

$$\tilde{Z}[i] := \tilde{Z}[\omega_i] - \tilde{Z}[\omega_{i-1}] \bmod J \text{ for all } i \in \{2, \dots, m\}$$

which is then coded using arithmetic coding.

In this embodiment, the coded sampled map Zc is obtained from the sequence $\tilde{Z}$. Block 100 then transmits both the mixture signal *x* and the coded sampled map Zc in order to allow a further separation of the source signals $s_j$, j from 1 to J, that compose the mixture based on the coded sampled map Zc.

Referring now to **figures 1a, 1b and 1c,** we present different methods for obtaining the sampling locations according to different embodiments of the present disclosure.

In all the embodiments, the sampling locations are based on a sampling distribution obtained in different ways as disclosed below in relation with blocks 150a2, 150a2b and 150a2c.

In the exemplary embodiment of block 150a, the sampling distribution (e.g. uniform distribution, Gaussian distribution, etc.) can be obtained in block 150a2. For instance, it can be a sampling distribution defined in advance, notably a sampling distribution that does not depend on the mixture signal x.

In block 150a1, the sampling locations are then obtained as a function of the sampling distribution obtained in block 150a2.

For instance, in one variant, the sampling locations are chosen deterministically from the sampling distribution (e.g. one can choose the locations where the sampling distribution has the largest values). In this variant, it is not required to transmit an extra parameter on top of the coded sampled map Zc as long as the method enforced for separating the signals in the mixture does know the criterion used for selecting the sampling locations deterministically from the sampling distribution and does apply the same operations on its own for generating the sampling locations in the same deterministic order.

In another variant, the sampling locations are chosen randomly according to the sampling distribution. In practice, a pseudo-random generator may be used. One needs to share the seed of this generator to obtain the same sampling locations at the encoder and the decoder. The seed can whether be transmitted on top of the coded sampled map Zc, or be predefined and fixed in advance, so that there is no need to transmit it. In both cases, the sampling locations are generated in the same deterministic order on both the transmit side and on the receive side for separating the source signals.

In another exemplary embodiment illustrated in block 150b, the sampling distribution is obtained in block 150a2b from a criterion relating to the energy distribution of the mixture x in the spectral domain.

More precisely, in block 150b2, the spectrogram of the mixture *x* is obtained and normalized for it to match the characteristics of a sampling distribution.

In block 150b1, the sampling distribution obtained in block 150b2 is used for obtaining the sampling locations according to one of the variants disclosed above in relation with block 150a1.

In the exemplary embodiments illustrated in block 150c, the sampling distribution is obtained in block 150a2c from a graph G connecting locations in the time-frequency plane based on the characteristics of the mixture signals x. Here the graph G is built for providing information on the TF points on which a given source signal is active. In other words, the inventors propose to use a graph that connects nodes in the time-frequency plane in which a given source signal is active for deriving an optimal sampling distribution for obtaining the sampling locations to be used for sampling the map Z.

However, it must be noted that the inventors propose as well to use such graph, that links the nodes in the time-frequency plane in which a given source signal is active, for obtaining (or estimating) an estimate $\hat{Z}$ of the map Z from the list of values $Z_\Omega$ as disclosed below in relation with block 250 in figure 2 and 220a in figure 2a. As such, the embodiments disclosed here in relation with block 150c apply equally for the method disclosed in relation with those blocks 250 and 220a.

Back to block 150c, we get from a general perspective that such graph G can be defined as the association of a set of nodes $\mathcal{N}$ (i.e. the locations in the time-frequency plane in the present application) of edges E (i.e. the nodes that can be estimated to be "close" to, or in the "neighborhood" of a given node according to a given metric), and an adjacency matrix $A \in \mathbb{R}^{|\mathcal{N}| \times |\mathcal{N}|}$ such that:

$$A[i,j] = A[j,i] > 0 \text{ if } (i,j) \in \mathcal{E} \text{ and } A[i,j] = 0 \text{ otherwise .}$$

It must be noted that the adjacency matrix, that links the nodes in the edges, is indeed symmetrical, i.e. if a i-th node is decided to be "adjacent" (in the meaning that the same source signal is active in the two nodes) to a j-th node, then it seems reasonable that the j-th node is decided to be "adjacent" to the i-th node. Consequently, the element a(i,j) in A that reflects this "adjacent" characteristic between the i-th node and the j-th node is equal to element a(j,i).

In one embodiment, the graph is built based on the similarity between feature vectors associated to the locations (i.e. the nodes) in the time-frequency plane, similar feature vectors at different locations in the time-frequency plane indicating a contribution of similar source signals at those different locations in the time-frequency plane.

Consequently, in block 150c4, feature vectors can be obtained from the mixture signal x, and only from the mixture signal.

Indeed, at least some embodiments of the present disclosure can help limiting the overhead in the bitstream on top of the mixture signal. Notably, some embodiments of the present disclosure propose a method in which the feature vectors, the graph G, and thus the sampling distribution at the end (which needs to be obtained on the receive side too when separating the source signals from the mixture), can be obtained independently from any additional information in the bitstream on top of the mixture signal x. In other embodiments, some other parameters (like a parameter representative of an elected graph as detailed below) can be also transmitted.

In the particular illustrated embodiment, it is proposed to use for instance a Non-negative Matrix Factorization (NMF) method for obtaining the feature vectors from the mixture signal x.

More particularly, the spectrogram $\mathbf{V} \in \mathbb{R}^{F \times N}$ of $x$ (i.e. $V[f,n] = |X[f,n]|^2$) can be first computed and then factorized by solving the following optimization problem (see "C. Févotte, N. Bertin, and J. Durrieu, "Non-negative matrix factorization with the Itakura-Saito divergence with application to music analysis," Neural Computation, vol. 21, no. 3, pp. 793-830, 2009"):

$$(\mathrm{W}^*, \mathrm{H}^*) := \underset{\mathrm{W} \in \mathbb{R}_+^{F \times Q}, \, \mathrm{H} \in \mathbb{R}_+^{Q \times N}}{\operatorname{argmin}} D(\mathrm{V} \,\|\, \mathrm{WH}), \qquad \text{(Eq-2)}$$

where

$$D(\mathrm{V} \,\|\, \hat{\mathrm{V}}) := \sum_{f,n=1}^{F,N} d_{\mathrm{IS}}(\mathrm{V}[f,n] \,\|\, \hat{\mathrm{V}}[f,n])$$

and

$$d_{IS}(x\|y) = x/y - \log(x/y) - 1$$

is the Itakura-Saito (IS) divergence - as an example of the considered divergence. However, other types of divergences such as Kullback-Leibler divergence or Euclidien distance can also be used.

In this NMF, $W^*$ is the spectral dictionary, $H^*$ is the time activation matrix, and Q is the number of NMF components. To solve (Eq-2), the matrices W and H are initialized with random non-negative values and are iteratively updated via the multiplicative update rule until convergence as detailed in the above-cited reference.

When $Q \geq J$ is appropriately chosen, the above NMF has the tendency to isolate the spectral characteristics of each source, i.e. $W^*[:,l]$ is a spectral characteristic of one of the source and $H^*[l,:]$ indicates the contribution of this characteristic in the overall spectrogram at each instant (Note that one source is usually characterized by several NMF components). At each TF point $(f,n)$, the following Q-dimensional feature vector $\mathbf{f}_{(f,n)}$ is obtained

$$\boldsymbol{f}_{(f,n)} = \Big( \mathrm{W}[f,1]\,\mathrm{H}[1,n], \, \dots, \, \mathrm{W}[f,Q]\,\mathrm{H}[Q,n] \Big)^{\mathsf{T}}$$

This feature vector provides hint to indicate which spectral characteristic is active at the TF point $(f, n)$. As only one source is essentially active at each TF point, connecting feature vectors $\boldsymbol{f}_{(f,n)}$ that are similar connects nodes for which the same source is active.

In other embodiments, feature vectors can be obtained based on a Deep Neural Network method (DNN) (see US patent document US 9,368,110 B1) or a Non-negative Tensor Factorization (NTF) (see "A. Ozerov, A. Liutkus, R. Badeau, and G. Richard, "Coding based informed source separation: Nonnegative tensor factorization approach," IEEE Transactions on Audio, Speech, and Language Processing, vol. 21, no. 8, pp. 1699-1712, August 2013"). Deep neuronal networks (DNN) can indeed be trained on datasets containing signals of interest. The feature vectors are thus adapted to these types of signals, which can potentially help improving the performance of the method. NMF and NTF are well-known tools to model audio signals. They do not need require pre-training and are thus more generic than DNN.

In block 150c3, the graph G is built based on the feature vectors obtained from the mixture signal *x* in block 150c4.

For that, and in order to simplify notations, let $i \in \{1, ..., NF\}$ index each time frequency point *(f,n)*, and substitute $f_i$ for $f_{(f,n)}$. Let also $z \in \{1, ..., J\}^{NF}$ be the vectorised version of Z.

In order to construct the graph G, we connect each feature vector to its eight nearest neighbors (in the sense of l1 norm), which gives a set $\varepsilon$ of *8NF* edges. The l1 norm is a mathematical norm for vectors which is defined as follows. For any vector $x \in \mathbb{R}^N$, the l1 norm satisfies $\|x\|_1 = \sum_{i=1}^{N} |x[i]|$ (http://mathworld.wolfram.com/L1-Norm.html). This norm is also called the taxicab norm or the Manhattan norm (https://en.wikipedia.org/wiki/Norm_(mathematics)#Taxicab_norm_or_Manhattan_nor m).

The L1 norm can be used for instance for comparing feature vectors that are globally similar except at few entries (outliers vectors). The adjacency matrix $A \in \mathbb{R}^{NF \times NF}$ of G satisfies

$$A[i, i'] := \exp\left[ -\frac{\|f_i - f_{i'}\|_1}{\mu} \right] \text{ for } (i, i') \in \mathcal{E}$$

and

$$A[i, i'] := 0 \text{ for } (i, i') \notin \mathcal{E}$$

where $\mu > 0$ is the mean of the values in the set $\{\|f_i - f_{i'}\|_1 : (i, i') \in \varepsilon\}$.

As the quality of the feature vectors depends on the choice of Q, in variants, several NMF are performed for different values of Q and concatenate all the feature vectors obtained before constructing the graph G.

In a variant, this is the l2 norm that is used for estimating the similarity in between the feature vectors, and not the l1 norm. The l2 norm is a mathematical norm for vectors which is defined as follows. For any vector $x \in \mathbb{R}^N$, the l2 norm satisfies $\|x\|_2 = \left( \sum_{i=1}^{N} |x[i]|^2 \right)^{1/2}$ (http://mathworld.wolfram.com/L2-Norm.html). This norm is also called the Euclidean norm (https://en.wikipedia.org/wiki/Norm_(mathematics)#Euclidean_norm).

In block 150c2, the sampling distribution is computed based on the graph G.

More particularly, in the present embodiment, the sampling probability distribution is defined on the nodes of G. This distribution is represented by $p \in \mathbb{R}^{NF}$. We obviously have $\|p\|_1 = 1$. The i-th entry of $p$, i.e. $p_i$ represents the probability of sampling node i. The samples are then chosen by selecting independently *m* different nodes according to $p$. We denote the set of selected indices $\Omega := \{\omega_1, \ldots, \omega_m\} \subset \mathcal{N}$.

For that, let introduce the degree matrix $D \in \mathbb{R}^{|\mathcal{N}| \times |\mathcal{N}|}$ which is the diagonal matrix with entries satisfying

$$D[i, i] := \sum_{j=1}^{|\mathcal{N}|} A[i, j].$$

The Laplacian of the graph is then defined as L=D-A. It is a real, symmetric, positive semi-definite matrix following the properties of A introduced above. Its real normalized eigenvectors form an orthonormal matrix

$$U = (u_1, \ldots, u_{|\mathcal{N}|}) \in \mathbb{R}^{|\mathcal{N}| \times |\mathcal{N}|}.$$

The corresponding real eigenvalues are denoted $0 = \lambda_1 \leq \cdots \leq \lambda_{|\mathcal{N}|}$.

Here, we recall that for any signal $z \in \mathbb{R}^{|\mathcal{N}|}$ living on the nodes of G, its Fourier representation is $\hat{z} := U^T z$ (Note that the Fourier coefficients $\hat{z}$ are ordered in increasing frequencies). A signal z is k-bandlimited on G if its Fourier coefficients $\hat{Z}_{k+1}, \cdots, \hat{Z}_{|\mathcal{N}|}$ are null as recalled in the above cited reference. More generally, we say that a signal is smooth on G if its energy is essentially concentrated at the lowest frequencies.

The probability of sampling node i, i.e. $p_i$, is then defined as

$$p_i = \frac{\|U_k^T \delta_i\|_2^2}{k},$$

where $\delta_i$ is the Dirac centered at node i and $U_k = (u_1,..., u_k)$.

It is indeed proven in "G Puy, N. Tremblay, R. Gribonval, and P. Vandergheynst, "Random sampling of bandlimited signals on graphs," Appl. Comput. Harmon. Anal., in press, 2016" that in that case only m = $O(k. \log(k))$ measurements can be sufficient to sample a k-bandlimited signal, with high probability.

In block 150c1, the sampling distribution obtained in block 150c2 is used for obtaining the sampling locations according to one of the variants disclosed above in relation with block 150a1.

In another embodiment, feature vectors are obtained by enforcing different methods (e.g. NMF, DNN or NTF) in block 150c4 so that different graphs are built. Then, at least one graph G is elected, whether manually or automatically, for deriving the sampling locations. Electing this graph can comprise, for example, by performing source separation using the different graphs and computing the source separation quality. The graph yielding the best result is elected. The quality can be computed, for example, by the signal-to-distorsion ratio (SDR). The SDR is a benchmarked metric grading the overall signal distortion (see "E. Vincent, R. Gribonval, and C. Fvotte, "Performance measurement in blind audio source separation," IEEE Transactions on Audio, Speech, and Language Processing, vol. 14, no. 4, pp.1462-1469, 2006"). One can also measure the quality using the signal-to-noise ratio or any perceptual quality measure such as the PAQM (see "J. G. Beerends and J. A. Stemerdink, "A Perceptual Audio Quality Measure Based on a Psychoacoustic Sound Representation", J. Audio Eng. Soc, vol. 40(12), pp. 963-978, 1992." In one variant, a parameter representative of the method used for obtaining the feature vectors used for building the graph G is transmitted in block 100 on top of the mixture signal x and of the list of values $Z_\Omega$, thus allowing determining feature vectors on the receive side for further separation of the source signals in the mixture based on the same method.

Referring now to **figure 2** and **figure 2a,** we present a flowchart of particular embodiments of the disclosed method for separating signals in a mixture of signals and a variant for estimating the map used in such method.

In block 230, the decoding of the sampled map Zc is performed in order to obtain the list of values $Z_\Omega$ that was encoded in block 130. As such, the inverse coding scheme as performed in block 130 is implemented in block 230 (e.g. inverse differential coding or inverse arithmetic coding)

The sampling locations are obtained in block 250, and used in block 220 for estimating an estimate Z of the map Z.

The various embodiments disclosed above in relation with block 150 in figure 1 and with block 150a, 150b and 150c in figures 1a, 1b and 1c respectively apply equally here for obtaining the sampling locations.

However, the sampling locations obtained in block 250 should be the same as the ones used on the transmit side for sampling the map Z. Indeed, as detailed below in relation with block 220, this allows reconstructing correctly the estimate Z of the map Z based on the list of values $Z_\Omega$ delivered by the decoding act in block 230.

This may require using the same sampling distribution as on the transmit side in block 150, and thus in the embodiments corresponding to the method disclosed in relation with block 150c, to enforce the same method for obtaining the feature vectors.

In the embodiment where feature vectors are obtained enforcing different methods (e.g. NMF, DNN or NTF) on the transmit side in block 150c4 (thus leading to having different graphs built for having one to be elected), the parameter sent on top of the mixture signal x and of the list of values $Z_\Omega$ allows selecting the "correct" method (that is to say the method that has been elected and used at the transmitting side) to be enforced in block 250 for obtaining the feature vectors and thus the graph G'.

In block 220, an estimate $\hat{Z}$ of the map Z is obtained based on the list of values $Z_\Omega$ obtained in block 230 and on the sampling locations obtained in block 250.

Based on the sampling locations, the elements of the map Z corresponding to those sampling locations in the TF plane are filled with corresponding elements in the list of values $Z_\Omega$ according to the method disclosed above in relation with block 120 in figure 1.

More precisely, it is assumed that the sampling locations obtained in block 250 are provided in a deterministic order so that a value sorted with a given rank r in the ordered list of values $Z_\Omega$ can be associated to a sampling location at TF point (*f,n*) corresponding to the r-th sampling location obtained in block 250.

However, for this operation to allow achieving the correct estimated map, this requires also that the same sampling locations are obtained in the same deterministic order in block 250 as in block 150 for the generation of the list of values $Z_\Omega$. In particular, the same sampling distribution may be used.

After the association of the values in the list of values $Z_\Omega$ with the corresponding elements of the estimated map $\hat{Z}$, a predefined value (e.g. a null value) is assigned to the remaining elements of the estimated map $\hat{Z}$.

In this embodiment, the information in the estimated map Z only corresponds to the information present in the list of values $Z_\Omega$ that was transmitted with the mixture signal x. The source signals $s_j$, j from 1 to J, in *x* are then separated based on this estimated map $\hat{Z}$ in block 210.

In another embodiment disclosed in relation with block 220a, the missing information is estimated on the basis of a graph in order to take advantage of the information in this object that indicates the connection between nodes in the time-frequency plane in which a given source signal is active.

For that, in block 220a3, feature vectors are obtained based on the received mixture signal x. In some embodiments, like in the illustrated embodiment, the feature vectors can be obtained independently from any other information. Here again, a motivation for such approach can be to help limiting the additional information to be transmitted in the bitstream on top of the mixture signal x.

According to that, it is proposed to use a method as disclosed above in relation with block 150c4 for obtaining feature vectors (e.g. NMF, DNN or NTF). However, it must be noted that the method used for deriving the present feature vectors may be different than the one used for deriving the feature vectors involved in the determination sampling distribution both on the transmit side (see block 150c4) and on the receive side (see block 250). Indeed, whereas the method used in blocks 150c4 and 250 should be the same for achieving the same sampling locations both on the transmit side and on the receive side for achieving the source signal separation, the method used in block 220a3 can be different.

In block 220a2, a graph G' is built based on the feature vectors obtained in block 220a3.

For this the method disclosed in relation with block 150c3 in figure 1c may be used, according to any of its variants.

In block 220a1, an estimated map $\hat{Z}$ is estimated based on the graph G' obtained in block 220a2, on the list of values $Z_\Omega$ obtained in block 230, and on the sampling locations obtained in block 250.

In one embodiment, it is proposed to reconstruct the binary activation matrix $M_j^*$ for each of the source signals $s_j$, j from 1 to J, from which one can deduce an estimate $\hat{Z}$ of the map Z (recall the correspondence between those entities given by (Eq-1)). More precisely, it is proposed to reconstruct the binary masks $m_j^*$ $(m_j^* \in \{0,1\}^{NF})$ that are the vectorised version of $M_j^*$.

Indeed, if Z is smooth on G' then the masks $m_j^*$ are also smooth on G' by construction. The sampled binary mask $\left(m_j^*\right)_\Omega$ (i.e. the binary mask $m_j^*$ restricted to the sample locations, in the same way as $Z_\Omega$ is the restriction of Z to those sample locations according to the method of association between the values in $Z_\Omega$ and the sample locations as disclosed in relation with blocks 150 and 220) can thus directly be deduced from $Z_\Omega$ as we have

$$m_j^*[i] := \left\{ \begin{array}{ll} 1 & \text{if } z[i] = j, \\ 0 & \text{otherwise,} \end{array} \right. \quad \text{for all } i \in \Omega.$$

The J masks $m_j$ can thus be reconstructed using the reconstruction result given in "G Puy, N. Tremblay, R. Gribonval, and P. Vandergheynst, "Random sampling of bandlimited signals on graphs," Appl. Comput. Harmon. Anal., in press, 2016" which proves that one can stably and accurately estimate $\left(m_j^*\right)_\Omega$ by solving

$$\min_{m \in \mathbb{R}^{NF}} \left\| P \left[ m_\Omega - (m_j^*)_\Omega \right] \right\|_2^2 + \gamma \, m^\mathsf{T} L \, m,$$

where $\gamma > 0$, L is the sparse Laplacian matrix defined above in relation with block 150c2, and $P \in \mathbb{R}^{m \times m}$ is the diagonal matrix that satisfies

$$P_{ii} = p_{\omega_i}^{-1/2}.$$

In one embodiment, the estimated $\tilde{m}_j$ of the mask $m_j$ are obtained by solving the constrained version of the above problem (obtained for $\gamma \to 0^+$), i.e.

$$\widetilde{m}_j := \min_{m \in \mathbb{R}^{NF}} m^\mathsf{T} L\, m \quad \text{subject to} \quad m_\Omega = (m_j^*)_\Omega.$$

However, in other embodiments, other constrained version of the above problem can be used.

In those embodiments, the source signals are then separated from the mixture using the estimated masks $\tilde{m}_j$ as an estimate $\hat{Z}$ of the map in block 210.

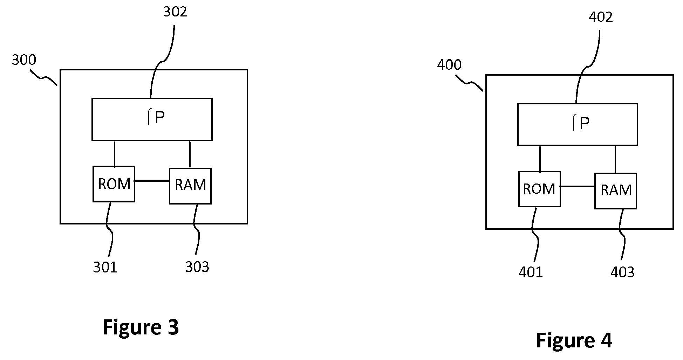

Referring now to **figures 3 and 4,** we illustrate an exemplary device 300 that can be used for implementing the method for encoding signals according to any of the embodiments disclosed in figures 1, 1a, 1b and 1c, and an exemplary device 400 that can be used for implementing the method for separating signals in a mixture of signals according to any of the embodiments disclosed in figures 2 and 2a respectively.

In an embodiment, the devices 300, 400 for implementing the disclosed methods comprise a non-volatile memory 303, 403 (e.g. a read-only memory (ROM) or a hard disk), a volatile memory 301, 401 (e.g. a random access memory or RAM) and a processor 302, 402. The non-volatile memory 303, 403 is a non-transitory computer-readable carrier medium. It stores executable program code instructions, which are executed by the processor 302, 402 in order to enable implementation of the methods described above (method for encoding signals and method for separating signals in a mixture) in their various embodiment disclosed in relationship with figures 1 to 2a.

Upon initialization, the aforementioned program code instructions are transferred from the non-volatile memory 303, 403 to the volatile memory 301, 401 so as to be executed by the processor 302, 402. The volatile memory 301, 401 likewise includes registers for storing the variables and parameters required for this execution.

All the steps of the above disclosed methods (method for encoding signals and method for separating signals in a mixture) may be implemented equally well:

- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a floppy disk, a CD-ROM or a DVD-ROM) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

## Claims

1. Method for encoding at least two signals, **characterized in that** it comprises:

   - mixing (160) said at least two signals in a mixture;
   - computing (110) a map Z representative of locations of said at least two signals in a time-frequency plane;
   - obtaining (150, 150a, 150b, 150c) sampling locations of said map Z;
   - sampling (120) said map Z at the sampling locations, said sampling delivering a first list of values $Z_\Omega$; and
   - transmitting (100) said mixture of the at least two signals and a second list of values based on said first list of values $Z_\Omega$.

2. Method for separating at least one signal from a mixture of at least two signals, **characterized in that** it comprises:

   - obtaining (230) a first list of values $Z_\Omega$ of a map Z at sampling locations in a time-frequency plane, said map Z being representative of locations of said at least two signals in said time-frequency plane;
   - obtaining (250) said sampling locations of said map Z;
   - estimating (220, 220a) an estimated map $\hat{Z}$ based on said sampling locations and on said first list of values

$Z_\Omega$; and
• separating (210) at least one of said at least two signals from said mixture based on said mixture and said estimated map $\hat{Z}$.

3. Method according to claim 2 wherein said estimating of an estimated map Z comprises:

• filling elements of said estimated map $\hat{Z}$ corresponding to said sampling locations with values in said first list of values $Z_\Omega$ with said sampling locations in said time-frequency plane.

4. Method according to claim 3 wherein said estimating of an estimated map $\hat{Z}$ comprises:

• reconstructing missing elements of said estimated map $\hat{Z}$, corresponding to locations different from the sampling locations.

5. Method according to claim 2 wherein said estimating of an estimated map Z comprises:

• obtaining (220a3) second feature vectors based on said mixture, similar feature vectors at different locations in said time-frequency plane indicating a contribution of similar signals at said different locations;
• building (220a2) a second graph G' connecting locations in said time-frequency plane based on a similarity between at least two second feature vectors; and
• computing (220a1) the estimated map based on said second graph, said sampling locations and said list of values $Z_\Omega$.

6. Method according to claim 1 or 2 wherein said act of obtaining sampling locations comprises:

• obtaining (150a2, 150a2b, 150a2c) a sampling distribution; and
• obtaining (150a1, 150b1, 150c1) said sampling locations based on said sampling distribution.

7. Method according to claim 6 wherein said act of obtaining a sampling distribution comprises computing said sampling distribution as a function of an energy content of said mixture in said time-frequency plane.

8. Method according to claim 6 wherein said act of obtaining a sampling distribution comprises:

• obtaining (150c4) first feature vectors based on said mixture, similar feature vectors at different locations in said time-frequency plane indicating a contribution of similar signals at said different locations;
• building (150c3) a first graph G connecting locations in said time-frequency plane based on a similarity between at least two first feature vectors; and
• computing (150c2) said sampling distribution based on said first graph.

9. Method according to claims 8 and 1 wherein said act of obtaining a sampling distribution comprises obtaining at least two different first graphs and electing one of said first graphs for deriving the sampling locations, and wherein said act of transmitting said mixture and said second list of values comprises transmitting a parameter representative of said electing.

10. Method according to claims 8 and 2 comprising obtaining a parameter to be used for obtaining the first feature vectors in said act of obtaining a sampling distribution.

11. Method according to any of the claims 1 to 10 wherein at least one of said at least two signals in said mixture is an audio signal.

12. Computer program product **characterized in that** it comprises program code instructions for implementing, when said program is executed on a computer or a processor, a method for encoding at least two signals comprising:

• mixing (160) said at least two signals in a mixture;
• computing (110) a map Z representative of locations of said at least two signals in a time-frequency plane;
• obtaining (150, 150a, 150b, 150c) sampling locations of said map Z;
• sampling (120) said map Z at the sampling locations, said sampling delivering a first list of values $Z_\Omega$; and
• transmitting (100) said mixture of the at least two signals and a second list of values based on said first list of

values $Z_\Omega$;
and/or a method for separating at least one signal from a mixture of at least two signals, comprising:

• obtaining (230) a first list of values $Z_\Omega$ of a map Z at sampling locations in a time-frequency plane, said map Z being representative of locations of said at least two signals in said time-frequency plane;
• obtaining (250) said sampling locations of said map Z;
• estimating (220, 220a) an estimated map $\hat{Z}$ based on said sampling locations and on said first list of values $Z_\Omega$; and
• separating (210) at least one of said at least two signals from said mixture based on said mixture and said estimated map $\hat{Z}$.

13. Device (300) for encoding at least two signals, **characterized in that** it comprises at least one processor configured for:

• mixing said at least two signals in a mixture;
• computing a map Z representative of locations of said at least two signals in a time-frequency plane;
• obtaining sampling locations of said map Z;
• sampling said map Z at the sampling locations, said sampling delivering a first list of values $Z_n$; and
• transmitting said mixture of the at least two signals and a second list of values based on said first list of values $Z_\Omega$.

14. Device (400) for separating at least one signal from a mixture of at least two signals, **characterized in that** it comprises at least one processor configured for:

• obtaining a first list of values $Z_\Omega$ of a map Z at sampling locations in a time-frequency plane, said map Z being representative of locations of said at least two signals in said time-frequency plane;
• obtaining said sampling locations of said map Z;
• estimating an estimated map $\hat{Z}$ based on said sampling locations and on said first list of values $Z_\Omega$; and
• separating at least one of said at least two signals from said mixture based on said mixture and said estimated map Z.

15. Bitstream representative of a mixture of at least two signals **characterized in that** it comprises said mixture of at least two signals and a second list of values based on a first list of values $Z_\Omega$ obtained as sampling values of a map Z representative of locations of said at least two signals in a time-frequency plane taken at sampling locations.

Figure 1

Figure 1a

**Figure 1b**

**Figure 1c**

Obtain
Sampling
locations

250

$s_1+...+s_J$

**Figure 2**

230

$Z_\Omega$

$\hat{Z}$

$Z_c$

Decoding

Estimate map

Source
Separation

$s_1$

$s_2$

220

210

from
block
250

220a3

220a2

220a1

220a

**Figure 2a**

$s_1+...+s_J$

Obtain
feature
vectors

Build graph

G'

Reconstruct
map

$Z_\Omega$

302

300

⌐P

ROM — RAM

301          303

**Figure 3**

402

400

⌐P

ROM — RAM

401          403

**Figure 4**

Europäisches
Patentamt

European
Patent Office

Office européen
des brevets

**EUROPEAN SEARCH REPORT**

**Application Number**

EP 16 30 6129

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BILEN CAGDAS ET AL: "Automatic allocation of NTF components for user-guided audio source separation", 2016 IEEE INTERNATIONAL CONFERENCE ON ACOUSTICS, SPEECH AND SIGNAL PROCESSING (ICASSP), IEEE, 20 March 2016 (2016-03-20), pages 484-488, XP032900648, DOI: 10.1109/ICASSP.2016.7471722 [retrieved on 2016-05-18] | 1-4,6,7, 11-15 | INV. G10L19/008 G10L19/20 |
| A | * In particular Sections 1 and 2.1, * | 5,8-10 | |
| X | EP 2 804 176 A1 (FRAUNHOFER GES ZUR FÖRDERUNG DER ANGEWANDTEN FORSCHUNG E V [DE]; FRIED) 19 November 2014 (2014-11-19) | 1-4,6,7, 11-15 | |
| A | * In particular, paragraphs 0002, 0046 to 0064 and 0073; Figure 11 * | 5,8-10 | |
| X | Cagdas Bilen ET AL: "Compressive sampling-based informed source separation", IEEE Workshop on Applications of Signal Processing to Audio and Acoustics, 8 July 2014 (2014-07-08), XP055216391, DOI: 10.1109/WASPAA.2015.7336953 Retrieved from the Internet: URL:https://hal.inria.fr/hal-01171833/document [retrieved on 2015-09-28] | 1-4,6,7, 11-15 | TECHNICAL FIELDS SEARCHED (IPC) G10L |
| A | * In particular, Sections 2 and 3 * | 5,8-10 | |

The present search report has been drawn up for all claims

| Place of search | Date of completion of the search | Examiner |
|---|---|---|
| The Hague | 9 March 2017 | Thean, Andrew |

EPO FORM 1503 03.82 (P04C01)

## ANNEX TO THE EUROPEAN SEARCH REPORT
## ON EUROPEAN PATENT APPLICATION NO.

EP 16 30 6129

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2017

| Patent document cited in search report | | Publication date | Patent family member(s) | | Publication date |
|---|---|---|---|---|---|
| EP 2804176 | A1 | 19-11-2014 | AR | 096257 A1 | 16-12-2015 |
| | | | AU | 2014267408 A1 | 03-12-2015 |
| | | | CA | 2910506 A1 | 20-11-2014 |
| | | | CN | 105378832 A | 02-03-2016 |
| | | | EP | 2804176 A1 | 19-11-2014 |
| | | | EP | 2997572 A1 | 23-03-2016 |
| | | | JP | 2016524721 A | 18-08-2016 |
| | | | KR | 20160009631 A | 26-01-2016 |
| | | | SG | 11201509327X A | 30-12-2015 |
| | | | TW | 201503112 A | 16-01-2015 |
| | | | US | 2016064006 A1 | 03-03-2016 |
| | | | WO | 2014184115 A1 | 20-11-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9368110 B1

**Non-patent literature cited in the description**

- **J. FRITSCH ; M.D. PLUMBLEY.** Score informed audio source separation using constrained nonnegative matrix factorization and score synthesis. *IEEE Int. Conf. on Acoustics, Speech, and Signal Processing (ICASSP),* 2013, 888-891
- **L. LE MAGOAROU ; A. OZEROV ; N. Q. K. DUONG.** Text-informed audio source separation. example-based approach using non-negative matrix partial co-factorization. *Journal of Signal Processing Systems,* 2014, 1-5
- **M. PARVAIX ; L. GIRIN.** Informed source separation of linear instantaneous under-determined audio mixtures by source index embedding. *IEEE Transactions on Audio, Speech, and Language Processing,* 2011, vol. 19 (6), 1721-1733
- **J. ENGDEGARD ; B. RESCH ; C. FALCHAND O. HELLMUTH ; J. HILPERT ; A. HOLZER ; L. TERENTIEV ; J. BREEBAART ; J. KOPPENS ; E. SCHUIJERS ; W. OOMEN.** Spatial audio object coding (SAOC) - The upcoming mpeg standard on parametric object based audio coding. *124th Audio Engineering Society Convention (AES),* May 2008
- **C. FÉVOTTE ; N. BERTIN ; J. DURRIEU.** Non-negative matrix factorization with the Itakura-Saito divergence with application to music analysis. *Neural Computation,* 2009, vol. 21 (3), 793-830
- **A. OZEROV ; A. LIUTKUS ; R. BADEAU ; G. RICHARD.** Coding based informed source separation: Nonnegative tensor factorization approach. *IEEE Transactions on Audio, Speech, and Language Processing,* August 2013, vol. 21 (8), 1699-1712
- **G PUY ; N. TREMBLAY ; R. GRIBONVAL ; P. VANDERGHEYNST.** Random sampling of bandlimited signals on graphs. *Appl. Comput. Harmon. Anal.,* 2016
- **E. VINCENT ; R. GRIBONVAL ; C. FVOTTE.** Performance measurement in blind audio source separation. *IEEE Transactions on Audio, Speech, and Language Processing,* 2006, vol. 14 (4), 1462-1469
- **J. G. BEERENDS ; J. A. STEMERDINK.** A Perceptual Audio Quality Measure Based on a Psychoacoustic Sound Representation. *J. Audio Eng. Soc,* 1992, vol. 40 (12), 963-978